Europäisches Patentamt

European Patent Office

Office européen des brevets

(19)

(11) Publication number: . 0 261 725
A1

(12) # EUROPEAN PATENT APPLICATION

(21) Application number: 87201753.8

(22) Date of filing: 15.09.87

(51) Int. Cl.4: C03C 4/08 , C03C 3/087

(30) Priority: 16.09.86 NL 8602341

(43) Date of publication of application:
30.03.88 Bulletin 88/13

(84) Designated Contracting States:
BE DE FR GB IT NL

(71) Applicant: Heineken Technisch Beheer B.V.
2e Weteringplantsoen 21
NL-1017 ZD Amsterdam(NL)

(72) Inventor: Schumacher, Leo
Ruhrglasstrasse 50
D-4300 Essen(DE)
Inventor: Drost, Benjamin Willem
2e Weteringplantsoen 21
NL-1017 ZD Amsterdam(NL)
Inventor: Van Strien, Jan
Burgemeester Smeetsweg 1
NL-2382 PH Zoeterwoude(NL)

(74) Representative: Smulders, Theodorus A.H.J.
et al
Vereenigde Octrooibureaux Nieuwe Parklaan
107
NL-2587 BP 's-Gravenhage(NL)

(54) A process for producing a UV-absorbing green glass.

(57) The invention concerns a process for making green glass permeable to visible light and highly absorbing to ultraviolet radiation, by treating a melt of a soda-lime glass under oxidizing conditions with a gas, said melt containing chromium compounds and nitrate.

In order to be able to use recycle glass, more in particular containing iron contamination, the invention is characterized by blowing an oxidizing gas into the melt of the glass, which contains at least 0.3% by weight of chromium, calculated as $Cr_2O_3$, 0.2-2.0% by weight of Na nitrate, no more than 1.5% by weight of Na sulphate, and 15 to 65% by weight of recycle glass.

EP 0 261 725 A1

## A process for producing a UV-absorbing green glass

The present invention relates to a process for producing a UV-absorbing green glass that is permeable to visible light and highly absorbent to ultraviolet radiation, which glass is suitable for the manufacture of containers for products sensitive to UV radiation, by treating a glass melt in a tank furnace with a gas blown into the furnace through nozzles.

French patent 1,275,824 discloses a process for making a UV-absorbing green glass by oxidizing trivalent chromium compounds in the glass melt to hexavalent chromium in the presence of Na nitrate.

UV-absorbing glasses are used, among other purposes, for the manufacture of containers for light-sensitive products. Examples of undesirable photochemical reactions caused by short-wave light, in particular UV radiation, are deterioration in flavour in the case of beer, wine and soft drinks, rancidification of oils, and loss of vitamines, for example, in milk.

The light-induced deterioration in the quality of beer is known from "Untersuchungen zur Lichtdurchlässigkeit von Flaschen, Gläsern und deren Bedeutung für die Qualitätserhaltung von Bier", Heinrich Vogelpohl, Weihenstephan, July 1981, pp. 44-50. According to this publication, radiation between 300 and 500 nm, i.e. partially UV radiation and partially visible light, is harmful to beer.

In order to prevent, or at any rate reduce, such undesirable reactions induced by light, it is known to use containers, for example bottles, made of brown or amber-coloured glass. Such glasses, however, have the disadvantage that, with a sufficient absorption of UV radiation, their transparency is relatively low, so that a visual observation and inspection of the product is difficult, if not downright impossible. The use of green glass for packing beverages, therefore, has a sales-promoting effect.

The use of green glass to protect UV-radiation sensitive products is also known. From "Colour Generation and Control in Glass", C.R. Bamford, 1977, page 46, it is further known that chromium-containing green glass is highly absorbing in the short-wave range of the spectrum, and that, for attunement between permeability in the visible range and absorption in the ultraviolet range, the ratio between trivalent and hexavalent chromium is of particular importance. Hexavalent chromium will absorb more in the UV range and trivalent chromium in the visible range.

On the basis of fundamental knowledge about the effect of chromium and its valency on the absorption characteristics in the visible and ultraviolet ranges, various glasses and process for their preparation have been proposed. Indeed, the basic starting point is that, to achieve a sufficiently high degree of oxidation to convert trivalent chromium oxide to hexavalent chromium oxide, the iron content should be kept as low as possible. This is only possible by using expensive starting materials poor in iron, and by avoiding impurities which may be caused, for example, by recycling glass. See for example the article by Güldal and Apak "A study on $Cr^{3+}/Cr^{6+}$ Equilibria in Industrial Emerald Green Glasses, Journal of Non-Crystalline Solids 39 & 39 (1980), 251-256.

The object of the present invention is to provide a process for preparing UV-absorbing green glass, which glass exhibits UV-absorption in the range below 500 nm comparable to brown glass, but which process in addition makes possible the use of inexpensive starting materials, specifically those having high iron contents and many impurities, such as recycling glass.

According to the present invention, this object is achieved by blowing an oxidizing gas into the melt of the glass which glass contains at least 0.3% by weight of chromium, calculated as $Cr_2O_3$, 0.2-2.0% by weight of Na nitrate, no more than 1.5% by weight of Na sulphate, and 15 to 65% by weight of recycle glass.

Advantageously, as will be indicated further hereinafter, the oxidizing gas used in the process according to the present invention is technically pure oxygen, or air enriched in oxygen. Specifically, the content of molecular oxygen is more than 50 or 95% by volume.

According to the present invention, it has been found to be possible to limit the amount of added chromium compounds without detracting from the UV-absorbing effect, if the amount of fluorine and chloride in the starting products is minimized. This can be accomplished by starting from soda with a low chloride content (0.2% by weight), not adding fluorspar (a source of fluorine), and avoiding plastic-coated recycle glass (PVC source) as much as possible.

Preferably, the content of fluorine and chloride is each restricted to maximum 0.01% by weight, preferably maximum 0.001% by weight. Limiting the amount of chromium in the glass has two advantages. First chromium-containing raw materials are expensive, so that a limitation of the chromium content is advantageous, and second glass with a high chromium content is difficult to re-use.

2

Advantageously, the starting product in the process according to the present invention is a mixture of the following starting products (in kg, calculated on 1000 kg glass mixture):

| | |
|---|---|
| sand | 300-400 kg |
| soda | 50-150 kg |
| limestone | 60-105 kg |
| dolomite | 0-25 kg |
| phonolite | 0-40 kg |
| fieldspar | 0-45 kg |
| chromium ore | 0-15 kg |
| chromium oxide | 0-5 kg |
| chromium slag | 0-70 kg |
| sodium sulphate | 0-11 kg |
| nitrate | 4-15 kg |
| fragments | 350-586 kg |

with at least one of the quantities of chromium ore, chromium oxide and chromium slag not being zero.

According to the present invention there is thus produced a glass having the following composition (in % by weight):

| | | |
|---|---|---|
| $SiO_2$ | 70-74 | % by weight |
| $Al_2O_3$ | 1.5-2.5 | % by weight |
| $Fe_2O_3$ | 0.25-0.7 | % by weight |
| chromium oxide | 0.3-0.85 | % by weight (as $Cr_2O_3$) |
| CaO | 10-11 | % by weight |
| MgO | 1-2 | % by weight |
| $Na_2O$ | 12-14 | % by weight |
| $K_2O$ | 0.4-1 | % by weight |
| $SO_3$ | 0.1-0.3 | % by weight. |

The combination of the starting materials used according to the invention, the introduction of an oxidizing gas, preferably oxygen, surprisingly gives the following advantages:

1. sufficient oxidation of the organic impurities of the fragments used, as will be further elaborated hereinafter;

2. shift of the Fe-II/Fe-III ratio to higher values, which also affects colour and heat absorption;

3. improvement of refinement;

4. reduction of rejects as a result of silicon inclusions; and

5. increase of the melting capacity by about 5%.

The varying amounts and kind of organic impurities introduced by the fragments (recycle glass) and starting materials lead to a continuously changing reduction potential. The resulting required changes of the redox potential of the melt result in deterioration in quality (changes in heat absorption resulting from varying IR transmission, varying degasing conditions). The oxidation of the impurities by the oxidizing gas, such as oxygen, provides the basis for a particularly constant redox potential of the melt.

In the case of green glass, the colour of the glass, and also the IR transmission, are greatly influenced by the degree of oxidation of the melt. The use of oxygen makes for easy and exact control within a specific band width.

The green glass obtained by using the process according to the present invention has a dominant wavelength ($\lambda$ dominant) which may be in the vicinity of 550-565 nm.

The presence of trivalent chromium, in combination with possibly other coloured compounds that may be present, determines the exact dominant wavelength. When $Cr_2O_3$ is partially replaced by up to 0.2% by weight of nickel oxide, the colour is shifted to olive green. The other characteristics of the glass, however, are not thereby changed.

The permeability to infrared radiation in the range of the $Fe^{2+}$ band is increased by about 20-30%. The increased permeability to infrared radiation leads to an improved heat absorption by the glass melt.

The use of oxygen as an oxidizing gas instead of air gives a clear improvement in refinement. The oxygen is preferably substantially free from impurities, i.e., its content of molecular oxygen is more than 95% by volume. It is also possible, however, to use oxygen with a higher content of inert gases, for example, oxygen containing at least 50% by volume of molecular oxygen. By using pure oxygen, the number of gas bubbles with a diameter less than 1 mm on average was reduced from 1.8 to 0.7/g glass, and particularly the larger diameter bubbles disappeared. This is a considerable improvement in glass quality.

3

Preferably, in addition to the saltpetre or Na nitrate, a minor proportion of sodium sulphate is used, for example, minimum 1 kg per 1000 kg of glass batch. This has a particularly favourable effect on the number of bubbles. High proportions of sulphate, as often used according to the state of the art (10-20 kg/1000 kg glass batch) are preferably not used, because this leads to a great increase in foaming, which has an adverse effect on heat transmission.

The manufacture of the glass takes place at conventional temperatures such as 1400 to 1500°C.

As, in the case of soda lime glass, the larger gas bubbles in the melt, prior to refinement, often contain $CO_2$, $N_2$ and $H_2O$, oxygen as a refinement gas is particularly effective. In fact, in this case the difference in concentration between the melt and the gas bubbles is largest. There is then a diffusion of the refinement gas (in this case $O_2$ and $SO_2$) to the bubbles, as a result of which these become larger as the temperature is increased, and escape from the melt. When the temperature is decreased (for example, in the tank furnace and the supply chute) the gas bubbles are diffused back into the melt, which leads to a resorption of, particularly, the small gas bubbles.

When fragments, i.e. recycle glass contaminated with aluminium (capsules, foils) are used, there is the danger of the reduction of silicon dioxide ($SiO_2$) by aluminium to elemental silicon, which separates in the glass in the form of compact spheres. On account of the large difference in coefficient of expansion of glass, on the one hand, and silicon, on the other, high compressive stresses are present in the glass after cooling which lead to breakage right away, or in the event of minor mechanical loads. When oxygen is used for inflation, rejects owing to silicon inclusions are greatly reduced. In fact, it has been found that, when sufficiently finely divided, aluminium is oxidized to $Al_2O_3$, but that, on the other hand, the oxidation of elemental silicon, once formed, is not very probable, as a $SiO_2$ protective skin is formed during the oxidation, which prevents further oxidation. According to the present invention reduction of silicon oxide takes place to a much lesser extent.

In the process according to the invention, preferably 1-2 $Nm^3$ of oxygen is used per tonne of glass. The quantity of oxygen used per tank furnace is about 10-20 $Nm^3$/hour, which is preferably introduced by means of 10-20 nozzles. More particularly such nozzles are arranged in 2 rows, at least one of which is present in the melting zone of the tank furnace.

Examples I-IV

In the following examples, a number of mixtures are described that can be used according to the present invention.

|  | I | II | III | IV |
|---|---|---|---|---|
| sand | 398.6 kg | 404.9 kg | 389.5 kg | 330.6 kg |
| soda | 123.9 kg | 122.0 kg | 125.5 kg | 90.9 kg |
| lime stone | 103.7 kg | 103.4 kg | 62.3 kg | 83.8 kg |
| dolomite | 22.0 kg | 20.5 kg | - | 19.6 kg |
| phonolite | - | 38.6 kg | - | 53.5 kg |
| fieldspar | 43.2 kg | - | 22.2 kg | - |
| chromium ore | 12.4 kg | 14.4 kg | 7.7 kg | - |
| chromium oxide | 1.2 kg | - | - | 3.6 kg |
| chromium slag | - | - | 68.9 kg | - |
| sodium sulphate | 7.2 kg | 7.2 kg | 10.0 kg | 3.0 kg |
| saltpetre, preferably sodium saltpetre | 9.0 kg | 9.0 kg | 5.0 kg | 10.0 kg |
| fragments | 400 kg | 400 kg | 400 kg | 500 kg |
|  | 1000 kg | 1000 kg | 1000 kg. | 1000 kg |

The chemical analysis of the glasses made from the above mixtures are, in % by weight, as follows:

|  | I | II | III | IV |
|---|---|---|---|---|
| $SiO_2$ | 71.2% | 71.0% | 71.0% | 71.9% |
| $Al_2O_3$ | 1.9% | 1.9% | 1.9% | 2.1% |
| $Fe_2O_3$ | 0.5% | 0.7% | 0.4% | 0.33% |
| $Cr_2O_3$ | 0.75% | 0.75% | 0.7% | 0.4% |
| CaO | 10.4% | 10.4% | 10.7% | 10.4% |
| MgO | 1.3% | 1.3% | 1.6% | 1.3% |
| $Na_2O$ | 12.9% | 12.9% | 13.0% | 12.4% |
| $K_2O$ | 0.8% | 0.8% | 0.5% | 0.8% |
| $SO_3$ | 0.2% | 0.2% | 0.2% | 0.2% |

The optical transmission, measured in a sample 2 mm thick is, for the above glass compositions, as follows:

|  |  |  | I | II | III | IV |
|---|---|---|---|---|---|---|
| D (2 mm, | 500 | nm | 21.3% | 21.3% | 22% | 33% |
| air) | 450 | nm | 0.3% | 1.4% | 2% | 3% |
|  | 400 | nm | 0% | 0% | 0% | 0% |

The so-called dominant wavelength ($\lambda$ dominant) is 558 nm for all of the above glass compositions.

The glass compositions described above were obtained in a tank furnace under the following conditions:

melt yield 151.1 t/d
content of fragments (calculated on the
molten glass) 42.03
moisture content (calculated on the
starting materials including fragments) 2.0%
oil consumption 745 l/h
supplementary electrical heating 910 kW
specific melting capacity 2568 t/m³ d
specific heat consumption (without
additional electrical heating) 4419 kJ/kg
specific heat consumption (including
supplementary electrical heating) 4929 kJ/kg
oxygen inflation through 12 nozzles into the
melt and into the refinement zone about 12 m³/h.

The above results show that it is possible, using relatively inexpensive starting materials, and using about 40% recycle glass, to achieve better UV absorption values than was possible according to the state of the art. It is in addition apparent that the present process makes it possible to increase the capacity of a tank furnace.

As appears from Example III, it is also possible, according to the present invention, in a manner known per se, to replace the proportions of chromium ore or chromium oxide used fully or partially by a chromium oxide-containing waste slag from the electrosteel manufacture. By using this waste slag, which normally can just be disposed of on a dump, it is possible not only to achieve an improvement in melting, but also to reduce the amount of saltpetre necessary to achieve the desired oxidation to about half.

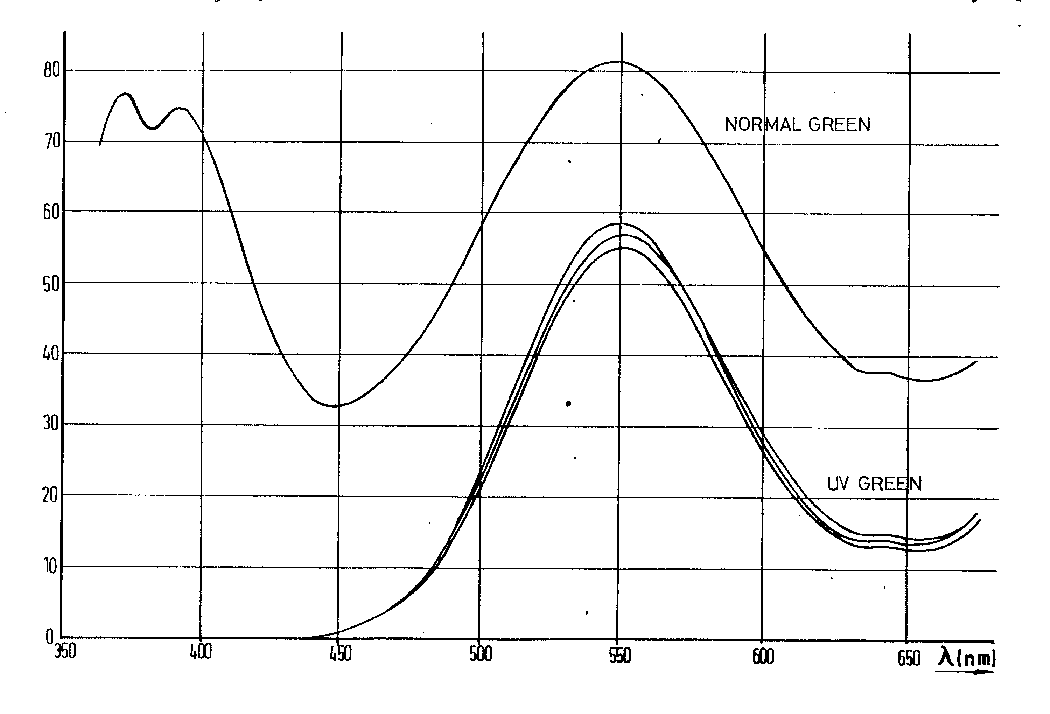

In the accompanying Figure, the curves for the percent permeability for wavelengths of between 350 and 650 nm, through a sample 2 mm thick, are shown for the glass compositions of Examples I, II and III, as compared with the corresponding curve for normal green glass. This last sample, however, was 2.5 mm thick.

As it clear, the normal green glass transmits a very large portion of the ultraviolet radiation in the range of between 350 and 500 nm, whereas the glass produced in accordance with the present invention exhibits a high absorption in this range.

Depending on the desired absorption in this range, the content of hexavalent chromium is at least 0.01% by weight, calculated on the glass, in particular 0.02 to 0.07% by weight. When a proportion of at least 0.04% by weight is used, a very favourable absorption is obtained.

## Claims

1. A process for making green glass permeable to visible light and highly absorbing to ultraviolet radiation, by treating a melt of a soda-lime glass under oxidizing conditions with a gas, said melt containing chromium compounds and nitrate, characterized by blowing an oxidizing gas into the melt of the glass, which contains at least 0.3% by weight of chromium, calculated as $Cr_2O_3$ 0.2-2.0% by weight of Na nitrate, no more than 1.5% by weight of Na sulphate, and 15 to 65% by weight of recycle glass.

2. A process as claimed in claim 1, characterized by starting from raw materials whose fluorine and/or chloride content is as low as possible.

3. A process as claimed in claim 2, characterized in that the fluorine content in the glass batch is no more than 0.01% by weight, preferably no more than 0.001% by weight.

4. A process as claimed in claim 2 or 3, characterized in that the chloride content in the glass batch is no more than 0.01% by weight, preferably no more than 0.001% by weight.

5. A process as claimed in claims 1-4, characterized by using as the oxidizing gas an oxygen containing at least 50% by volume of molecular oxygen.

6. A process as claimed in claim 5, characterized in that the gas contains at least 95% by volume of molecular oxygen.

7. A process as claimed in claims 1-6, characterized by preparing a glass batch having the following composition in kg, calculated on 1000 kg of glass batch

| | |
|---|---|
| sand | 300-400 kg |
| soda | 50-150 kg |
| limestone | 60-105 kg |
| dolomite | 0-25 kg |
| phonolite | 0-40 kg |
| fieldspar | 0-45 kg |
| chromium ore | 0-15 kg |
| chromium oxide | 0-5 kg |
| chromium slag | 0-70 kg |
| sodium sulphate | 0-11 kg |
| nitrate | 4-15 kg |
| fragments | 350-586 kg |

in which at least one of the proportions of chromium ore, chromium oxide and chromium slag is not zero.

8. A process as claimed in claims 1-7, characterized in that the product glass has the following composition:

| | | |
|---|---|---|
| $SiO_2$ | 70-74 | % by weight |
| $Al_2O_3$ | 1.5-2.5 | % by weight |
| $Fe_2O_3$ | 0.25-0.7 | % by weight |
| chromium oxide | 0.3-0.85 | % by weight (as $Cr_2O_3$) |
| CaO | 10-11 | % by weight |
| MgO | 1-2 | % by weight |
| $Na_2O$ | 12-14 | % by weight |
| $K_2O$ | 0.4-1 | % by weight |
| $SO_3$ | 0.1-0.3 | % by weight. |

9. A process as claimed in claims 1-8, characterized in that the conditions are chosen so that the glass contains a proportion of at least 0.01% by weight of chromium (VI) oxide.

10. A process as claimed in claim 9, characterized in that the proportion of chromium(VI)oxide is between 0.02 and 0.07% by weight.

11. A process as claimed in claims 1-10, characterized in that the chromium oxides are replaced in full or in part by a proportion of no more than 0.2% by weight of nickel oxide.

12. A process as claimed in claims 1-10, characterized by using 1-3 m³ of oxygen per tonne of glass.

13. A process as claimed in claim 12, characterized in that about 10-20 m³ of oxygen per hour is supplied through 10-20 nozzles.

14. A process as claimed in claim 13, characterized in that said nozzles are arranged in two rows, at least one row being positioned in the melting zone of the tank furnace.

15. A container, in particular a bottle, for products sensitive to UV radiation, consisting in full or in part of glass produced in accordance with claims 1-14.

NORMAL GREEN

UV GREEN

λ (nm)

0 261 725

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | FR-A-1 275 824 (OWENS-ILLINOIS)<br>* Abstract; page 6, left-hand column D, C * | 1,5-8, 11-13, 15 | C 03 C 4/08<br>C 03 C 3/087 |
| Y | US-A-2 331 052 (H.A. SHADDUCK)<br>* Claim 1 * | 5,6,12, 13 | |
| Y | DD-A- 69 675 (S. LEHMANN)<br>* Claims * | 1,7,8 | |
| Y | GB-A-2 049 656 (THE MOLSON COMPANIES)<br>* Claims * | 11 | |
| Y | P.J. DOYLE: "Glass-making today", pages 31,42,43, Portaellis Press, Redhill<br>* Page 31, last paragraph; page 42, last paragraph; page 43, paragraph 1 * | 1,7 | |
| Y | CHEMICAL ABSTRACTS, vol. 103, no. 6, August 1985, page 266, abstract no. 41390r, Columbus, Ohio, US; & SU-A-1 151 521 (STATE SCIENTIFIC-RESEARCH INSTITUTE OF GLASS; "KRASNYI LUCH" GLASS PLANT) 23-04-1985<br>* Whole abstract * | 1 | TECHNICAL FIELDS SEARCHED (Int. Cl.4)<br><br>C 03 C 3/00<br>C 03 B 5/00<br>C 03 C 4/00 |
| Y | US-A-3 844 796 (OWENS-ILLINOIS)<br>* Column 1, lines 60-68; column 2, lines 39-46 * | 1,8,15 | |

The present search report has been drawn up for all claims

| Place of search | Date of completion of the search | Examiner |
|---|---|---|
| THE HAGUE | 08-12-1987 | BOUTRUCHE J.P.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)